Europäisches Patentamt

European Patent Office

Office européen des brevets

(11) Veröffentlichungsnummer: **0 096 765**
A1

## (12) EUROPÄISCHE PATENTANMELDUNG

(21) Anmeldenummer: 83105062.0

(22) Anmeldetag: 21.05.83

(51) Int. Cl.³: **C 04 B 39/00**, B 32 B 13/14, F 16 L 59/02, E 04 B 1/80, D 03 D 15/12, C 04 B 43/00

(30) Priorität: 16.06.82 DE 3222679

(43) Veröffentlichungstag der Anmeldung: 28.12.83
Patentblatt 83/52

(84) Benannte Vertragsstaaten: **AT BE CH DE FR GB IT LI NL SE**

(71) Anmelder: **Grünzweig + Hartmann und Glasfaser AG, Bürgermeister-Grünzweig-Strasse 1-47, D-6700 Ludwigshafen am Rhein (DE)**

(72) Erfinder: **Sommer, Rolf, Mutterstadter Strasse 5, D-6701 Dannstadt (DE)**

(54) **Wärmedämmplatte aus teilchenförmigem, mikroporösem Wärmedämmaterial.**

(57) Pulverförmiges, feindisperses Wärmedämmaterial (7) wird in einer Umhüllung (1) aus gegenüber dem Wärmedämmaterial dichtem, jedoch luftdurchlässigem Gewebe zur Bildung einer umhüllten Wärmedämmplatte verpreßt, die für einen Einsatz bei Temperaturen oberhalb etwa 500 °C vorgesehen ist. Bei der Einsatztemperatur zeigen nicht ausreichend temperaturbeständige Fäden (5) des Gewebes beispielsweise aus Bohrsilikatglas Rekristallisations- und Zersetzungserscheinungen. Dazwischen eingearbeitete Fäden (6) aus temperaturbeständigem Material wie Quarzglas sichern jedoch auch bei hohen Temperaturen eine gegen Abrief in der Luftströmung feste Abdeckung der Oberfläche des Wärmedämmaterials (7), so daß trotz überwiegender Verwendung nicht ausreichend temperaturbeständiger, aber preisgünstiger Fäden (5) auf jegliche Zusatzmaßnahmen für einen Schutz der empfindlichen Oberfläche des Wärmedämmaterials (7) gegen Abrieb verzichtet werden kann.

# KUHNEN & WACKER 0096765

## PATENTANWALTSBÜRO

### REGISTERED REPRESENTATIVES BEFORE THE EUROPEAN PATENT OFFICE

Grünzweig + Hartmann

und Glasfaser AG.

6700 Ludwigshafen

PATENTANWÄLTE

R.-A. KUHNEN*, DIPL.-ING.
W. LUDERSCHMIDT**, DR., DIPL.-CHEM.
P.-A. WACKER*, DIPL.-ING., DIPL.-WIRTSCH.-ING.

11 GHO3 14 2/ko

P 773 DE

## Wärmedämmplatte aus teilchenförmigem, mikroporösem Wärmedämmaterial

Die Erfindung betrifft eine Wärmedämmplatte aus durch Pressen verdichtetem teilchenförmigem, mikroporösem Wärmedämmaterial, insbesondere auf der Basis von aus der Flammenhydrolyse gewonnenem Oxidaerogel wie Kieselsäureaerogel, nach dem Oberbegriff des Anspruchs 1.

Wärmedämmende Preßstoffe auf der Basis von aus der Flammenhydrolyse gewonnenem, mikroporösem Oxidaerogel, insbesondere Kieselsäureaerogel, sind vielfach bekannt und beispielsweise unter der Bezeichnung MINILEIT (eingetr. Warenzeichen) der Anmelderin im Handel, sowie vielfach beschrieben.

Bei der Herstellung von Wärmedämmplatten aus derartigem Wärmedämmaterial wird das pulverförmige Wärmedämmaterial häufig in eine Umhüllung eingefüllt, die für die Partikel des pulverigen Wärmedämmaterials undurchlässig, für Luft hingegen durchlässig ist, und wird in der anschließend rundum verschlossenen Umhüllung verpreßt. Beim Verpressen hält die Umhüllung das Wärmedämmaterial unter dem Preßdruck, so daß dessen definierte Verdichtung erfolgt. Etwa gemäß der

BÜRO 6370 OBERURSEL**
LINDENSTRASSE 10
TEL 06171/56849

BÜRO 8050 FREISING*
SCHNEGGSTRASSE 3-5
TEL 08161/62091

ZWEIGBÜRO 8390 PASSAU
LUDWIGSTRASSE 2
TEL 0851/36616

DE-PS 20 36 124 wird das Pressen des mikroporösen Wärmedämmaterials in der Umhüllung so geführt, daß eine möglichst innige Verzahnung der feindispersen Wärmedämmstoffe untereinander und mit der Oberfläche bzw. den Poren der relativ rauhen Umhüllung beispielsweise aus Glasgewebe erfolgt; diese Verzahnung oder Verkrallung soll der so gebildeten Sandwich-Platte erhöhte Steifigkeit vermitteln. Aus der DE-OS 29 28 695 ist es in diesem Zusammenhang bekannt, ein Trennmittel zwischen der Oberfläche des mikroporösen Wärmedämmaterials und der Umhüllung einzubringen und so zu vermeiden, daß der Preßvorgang hier zu einer mechanischen Verkrallung führt; dadurch werden Relativbewegungen zwischen der Oberfläche des mikroporösen Preßstoffes und der Umhüllung möglich und ergibt sich eine erheblich verbesserte Biegbarkeit des Verbundkörpers. Wegen weiterer Einzelheiten insoweit wird auf den genannten Stand der Technik ausdrücklich Bezug genommen.

In jedem Falle vereinfacht die Umhüllung den Preßvorgang durch Aufbau eines allseitigen Druckspannungszustands zur Verdichtung des mikroporösen Wärmedämmaterials und bietet im Gebrauch so hergestellter Wärmedämmplatten den Vorteil einer abriebfesten Oberfläche, da die Umhüllung die Oberfläche des mikroporösen Wärmedämmaterials, die mechanisch wenig widerstandsfähig ist, abdeckt und schützt.

In der Regel wird die Umhüllung aus einem Gewebe aus Glasfäden gefertigt, die aus Bohrsilikatglas-Filamenten aufgebaut sind, wobei in der Regel das bahnförmig angelieferte Gewebe entsprechend der Länge und der doppelten Breite der herzustellenden Wärmedämmplatte zugeschnitten, umgeschlagen, an zwei Seiten vernäht und nach Einfüllung des pulverförmigen Wärmedämmaterials an der verbleibenden Seite vernäht sowie anschließend in der geschilderten Weise verpreßt wird. So hergestellte Wärmedämmplatten werden beispielsweise in Elektro-Wärmespeichergeräten zur Wärmedämmung der Speicherkerne eingesetzt und bis ca. 750°C belastet. In diesen Geräten sind zum Teil luftführende Kanäle zwischen Speicherkern und Dämmplatte angeordnet. Insbesondere durch Spannungswechsel infolge häufiger Temperaturänderung wird die Oberder Dämmplatte zusätzlich mechanisch belastet.

Es hat sich gezeigt, daß ab einer Temperatur von etwa 300°C das Glasgewebe zu schrumpfen beginnt, während umgekehrt das mikroporöse Wärmedämmaterial expandiert, so daß das Gewebe der Umhüllung unter zusätzlichen Druck kommt. Über etwa 500°C wird das Bohrsilikatglas der Glasfilamente spröde und zeigt Rekristallisationserscheinungen, welche bei weiterer Temperaturerhöhung zumal unter der zusätzlichen Zugspannung schnell zu Rissen und schließlich auch zu Zersetzungserscheinungen der Umhüllung führen. Damit verliert die Umhüllung ihre Schutzfunktion für die Oberfläche des Wärmedämmaterials, so daß diese unter dem Einfluß der Luftströmung Abrieberscheinungen zeigen würde. Um diese zu vermeiden, wird in der Praxis häufig auf der warmen Seite der Wärmedämmplatte eine Blechabdeckung angeordnet, was einerseits teuer ist und andererseits durch die erhebliche Wärmedehnung des Metallbleches zu weiteren Problemen führt.

Es ist natürlich erwogen worden, die Umhüllung aus einem Gewebe herzustellen, welches ausreichend temperaturbeständig ist, also auch bei 750°C keine Veränderungen oder gar Zersetzungen erfährt. Hierzu könnte ohne weiteres die Umhüllung aus einem Glasgewebe mit Quarzglas-Filamenten gefertigt werden, welches sich ausgezeichnet eignen würde. Ein Quarzglasgewebe ist jedoch um ein Vielfaches teurer als ein übliches Gewebe aus Bohrsilikatglas oder sogenanntem E-Glas, so daß eine Verwendung in der Praxis nicht in Frage kommt.

Der Erfindung liegt die Aufgabe zugrunde, eine Wärmedämmplatte mit einer Umhüllung aus Gewebe zu schaffen, die ohne unakzeptable Verteuerung auch bei hohen Temperaturen bis zu etwa 750°C den erforderlichen Oberflächenschutz der Wärmedämmplatte gegen Abrieb ohne weiteres Zutun gewährleistet.

Die Lösung dieser Aufgabe erfolgt durch die kennzeichnenden Merkmale des Anspruchs 1.

Der Erfindung liegt die Überlegung zugrunde, daß das Gewebe einerseits in dichter Webart hergestellt sein muß, um beim Preßvorgang einen Durchtritt der teilchenförmigen, feindispersen Partikel des pulverförmigen Wärmedämmaterials auszuschließen, andererseits aber zur Erfüllung der Schutzfunktion gegen Abrieb im Gebrauch keine derartige Pulverdichtheit mehr erforderlich ist, da das Wärmedämmaterial bereits durch Pressen verdichtet und verfestigt ist. Den Schutz gegen Abrieb gewährleistet auch eine abdeckende Umhüllung, die eine Beaufschlagung der Oberfläche des Wärmedämmaterials durch heftige Luftwirbel ausschließt, jedoch nicht zwangsläufig absolut vollflächig und dicht vorliegen muß. Wenn daher erfindungsgemäß im Gewebe der Umhüllung neben den nicht ausreichend temperaturbeständigen, üblichen Fäden Fäden höherer Temperaturbeständigkeit eingearbeitet sind, so bilden diese gewissermaßen ein auch bei hoher Temperatur noch völlig intaktes Gerüst, welches die mechanische Integrität der abdeckenden Umhüllung sichert. Dabei können die gegenseitigen Abstände der temperaturbeständigen Fäden durchaus recht erheblich sein und bis zu einem Mehrfachen der Fadendicke des ungestörten Gewebes betragen, da die unversehrten Fäden auch die Gewebeteile aus beschädigten Fäden geringerer Temperaturbeständigkeit noch an Ort und Stelle halten; derartige, durch Rekristallisationserscheinungen angegriffene Fäden verlieren zwar ihre Zugbelastbarkeit und sonstige wesentliche mechanische Eigenschaften, bleiben jedoch körperlich als solche erhalten und können so, gestützt durch die unversehrten Fäden, zur Abdeckung der Oberfläche des Wärmedämmaterials durchaus noch einen wesentlichen Beitrag leisten. Die temperaturbeständigen Fäden wirken somit ähnlich wie eine Umwicklung einer üblichen, nicht ausreichend temperaturbeständigen Umhüllung mit temperaturbeständigen Haltefäden, die das Gewebe der Umhüllung auch dann an der Oberfläche des Wärmedämmaterials halten, wenn dieses von Rissen durchzogen ist und ohne zusätzliche Halterung abfallen würde. Zusätzlicher Aufwand für nachträgliche Umwicklungen od. dgl. der umhüllten Wärmedämmplatte wird jedoch erfindungsgemäß dadurch vermieden, daß derartige Halte- oder Stützfäden aus temperaturbeständigem Material bereits bei der Fertigung des Gewebes in dieses unter Ersatz entsprechender nichttemperaturbeständiger Fäden eingearbeitet werden, so daß lediglich die Gewebekosten als solche durch teilweise Verwendung von höherwertigem Material geringfügig ansteigen, ansonsten jedoch keine weiteren Kosten anfallen, da der Herstellungsvorgang im übrigen völlig unverändert ist.

Die Unteransprüche haben vorteilhafte Weiterbildungen der Erfindung zum Inhalt.

Weitere Einzelheiten, Merkmale und Vorteile der Erfindung ergeben sich aus der nachfolgenden Beschreibung einer Ausführungsform anhand der Zeichnung.

Es zeigt

Fig. 1   eine perspektivische Ansicht einer erfindungsgemäßen Wärmedämmplatte mit Umhüllung,

Fig. 2   in stark vergrößerter Darstellung einen Ausschnitt gemäß Kreis II in Fig. 1 und

Fig. 3   eine beispielhafte Darstellung des in Fig. 2 veranschaulichten Gewebebereichs nach Wärmeeinwirkung im Betrieb.

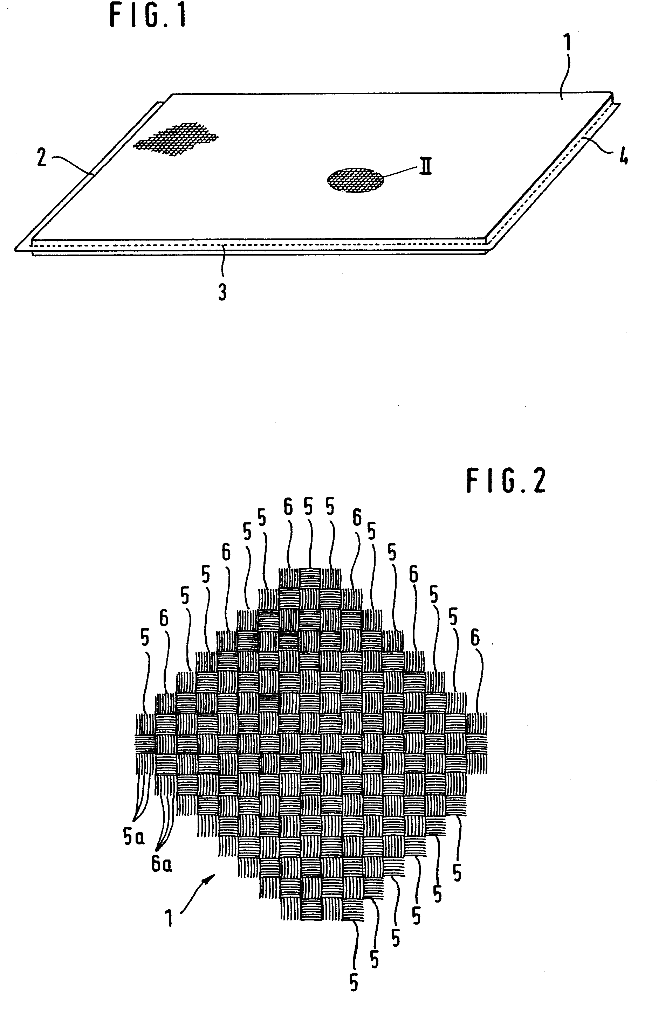

Die Wärmedämmplatte gemäß Fig. 1 weist eine Umhüllung 1 aus Gewebe auf, das im Beispielsfalle in Bahnform zur Verfügung gestellt wird und nach Zuschnitt zunächst durch Nähte 2 und 3 zur Bildung eines Sackes vernäht wurde.

An der verbleibenden offenen Seite des so gebildeten Sackes aus der Umhüllung 1 wird sodann feindisperses, teilchenförmiges Pulvermaterial als Wärmedämmaterial eingefüllt, wie dieses beispielsweise aus der US-PS 30 55 831 oder den DE-OSen 27 47 663, 27 48 307 und 27 54 956 bekannt ist, auf die sämtlich wegen weiterer Einzelheiten insoweit ausdrücklich Bezug genommen wird. Im Beispielsfalle bevorzugt möge ein Wärmedämmaterial sein, welches aus einem homogenen Gemisch aus 30 bis 50 Gew.-% pyrogener Kieselsäure, 20 bis 50 Gew.-% Trübungsmittel und 5 bis 15 Gew.-% Aluminiumsilikatfasern besteht. Nach dem Einfüllen des aus diesen Bestandteilen gemischten Wärmedämmaterials wird die Umhüllung 1 durch eine Naht 4 rundum geschlossen und erfolgt ein Preßvorgang, bei dem das Wärmedämmaterial durch die Umhüllung 1 unter einen allseitigen Druckzustand gerät und auf ein Raumgewicht von beispielsweise 200 bis 400 kg/m$^3$ verdichtet und so verfestigt wird; dabei wird der zuvor mit Pulver gefüllte Sack der Umhüllung 1 zu einer steifen umhüllten Wärmedämmplatte, wie dies aus dem eingangs genannten Stand der Technik im einzelnen bekannt ist.

Das Gewebe der Umhüllung 1, welches in Fig. 2 näher veranschaulicht ist, möge im Beispielsfalle als Glasgewebe ausgebildet sein, jedoch kommen grundsätzlich natürlich auch andere Stoffe zur Bildung des Gewebes der Umhüllung 1 in Frage. In jedem Falle jedoch weist das Gewebe der Umhüllung 1 mit 5 bezeichnete Fäden aus einem Material auf, welches für die Einsatztemperatur der Wärmedämmplatte von 500°C oder mehr, beispielsweise von 750°C nicht ausreichend temperaturbeständig ist, sowie regelmäßig verteilt eingearbeitete Fäden 6 aus andersartigem Material höherer Temperaturbeständigkeit. Im Beispielsfalle bestehen die Fäden 5 aus Bohrsilikatglas, sogenanntem E-Glas, welches in Form feiner Filamente 5a vorliegt, die in hoher Anzahl von beispielsweise rund 100 Filamenten 5a einen bei der Herstellung geschlichteten Faden 5 bilden. Die Fäden 6 bestehen in ähnlicher Weise

7

aus Filamenten 6a, jedoch auf der Basis von Aluminiumsilikat oder Siliciumoxid oder Gemischen hiervon, im Beispielsfalle also Quarzglas, das entsprechend temperaturbeständiger ist und etwa bei 750°C noch keine merklichen
Veränderungen oder gar Zerstörungen zeigt. Die Multifilament-Fäden 5 und 6 sind in der üblichen Weise zur
Bildung des Glasgewebes der Umhüllung 1 miteinander verwoben, wobei durch die Fadenspannung im Webautomaten in
der bekannten Weise eine gewisse Abplattung der Fäden 5
und 6 auftritt, die dann ähnlich Filamentbändern mit
einer Breite von beispielsweise 1 mm vorliegen können
und im wesentlichen lückenlos aneinander anschließen.
Hierdurch ergibt sich zwar eine ausreichende Luftdurchlässigkeit, so daß in dem durch die Umhüllung 1 gebildeten Sack eingeschlossene Luft beim Preßvorgang entweichen kann, jedoch eine ausreichende Dichtheit gegen
das pulverförmige Wärmedämmaterial beim Preßvorgang, so
daß dieses sauber in der Umhüllung 1 eingeschlossen
bleibt. Für die Produktion liegen also dieselben Verhältnisse vor wie bei einem in der üblichen Weise ausschließlich aus Multifilament-Fäden 5 aus Bohrsilikatglas gefertigten Gewebe für die Umhüllung 1.

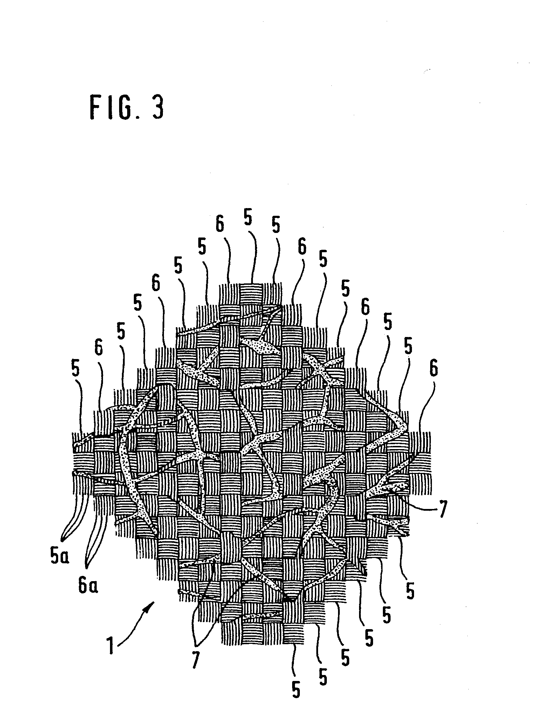

Im Beispielsfalle sind die in der Darstellung gemäß den
Fig. 2 und 3 waagerechten Gewebefäden ausschließlich
durch Fäden 5 aus Bohrsilikatglas gebildet, während die
diese kreuzenden Fäden zum Teil durch Fäden 6 aus Quarzglas gebildet sind, wobei der Abstand zwischen zwei Fäden 6 aus Quarzglas durch zwei Fäden 5 aus Bohrsilikatglas bestimmt wird. Bevorzugt entspricht dabei die in den
Fig. 2 und 3 senkrechte Fadenrichtung der Kettrichtung
des Gewebes, so daß die andersartigen Fäden 6 aus Quarzglas kontinuierlich als Kettfäden in den Webautomaten
einlaufen können und nicht zusätzlicher Aufwand für Fadenwechsel im Schußfaden erforderlich wird. Bei Bedarf kann
jedoch natürlich eine größere Dichte der Fäden 6 aus
Quarzglas erzeugt werden und durch Verwendung von Fäden 6
aus Quarzglas auch im Schuß tatsächlich ein grobes Fadengitter aus Quarzglas erzeugt werden. Es entsteht dann praktisch ein Grobgewebe aus Quarzglas, dessen Lücken durch Fäden 5 aus Bohrsilikatglas gefüllt sind. In jedem Falle liegt jedoch zwischen zwei Fäden 5 aus Bohrsilikatglas höchstens ein Faden aus Quarzglas, alternieren also die Fäden 5 und 6 sowohl in der Kette als auch im Schuß, so daß gegenüber einem vollständig aus Quarzglas gefertigten Gewebe der Quarzglasanteil maximal 50% beträgt und sich eine entsprechende Kostenminderung gegenüber einem Quarzglasgewebe ergibt. Häufig wird jedoch ein erheblich geringerer Anteil an Quarzglasfäden 6 ausreichen, wie in der Zeichnung veranschaulicht ist, so daß zusätzliche Kosten hierfür relativ gering sind.

Wie aus Fig. 3 ersichtlich ist, wird der Zusammenhalt der aus Fäden 5 aus Bohrsilikatglas gebildeten Gewebeteile bei Einwirkung entsprechend hoher Temperaturen zwar zerstört, so daß dieses temperaturunbeständige Füllgewebe von Rissen durchzogen ist und auch zuweilen klafft, jedoch werden die so gebildeten Gewebefetzen durch die Fäden 6 aus Quarzglas, noch an Ort und Stelle lagegesichert und tragen wesentlich zur Abdeckung der Oberfläche des Wärmedämmaterials bei, welches in Fig. 3 mit 7 bezeichnet ist. Damit ist die Oberfläche des Wärmedämmaterials 7 immer noch ausreichend gegen mechanische Abriebbelastung durch Luftwirbel od. dgl. geschützt, da selbst in klaffenden Rissen keine oberflächennahen hohen Luftgeschwindigkeiten auftreten können.

—— PATENTANWALTSBÜRO ——

REGISTERED REPRESENTATIVES BEFORE THE EUROPEAN PATENT OFFICE

Grünzweig + Hartmann

und Glasfaser AG

6700 Ludwigshafen

PATENTANWÄLTE
R.-A. KUHNEN*, DIPL.-ING.
W. LUDERSCHMIDT**, DR., DIPL.-CHEM.
P.-A. WACKER*, DIPL.-ING., DIPL.-WIRTSCH.-ING.

11 GHO3 14 2/ko

## Patentansprüche

1. Wärmedämmplatte aus durch Pressen verdichtetem teilchenförmigem, mikroporösem Wärmedämmaterial, insbesondere auf der Basis von aus der Flammenhydrolyse gewonnenem Oxidaerogel wie Kieselsäureaerogel, mit einer geschlossenen Umhüllung aus Gewebe für den Druckaufbau im Wärmedämmaterial bei dessen Verdichtung, wobei die Fäden im Gewebe so dicht benachbart angeordnet sind, daß das Gewebe dicht gegenüber den Partikeln des teilchenförmigen Wärmedämmaterials, jedoch durchlässig für Luft ist, und wobei temperaturunbeständige Fäden des Gewebes bei der Einsatztemperatur der Wärmedämmplatte Veränderungen oder Zerstörungen erfahren, dadurch gekennzeichnet, daß im Gewebe der Umhüllung (1) regelmäßig verteilt außer den temperaturunbeständigen Fäden (5) andersartige Fäden (6) mit einer höheren Temperaturbeständigkeit eingearbeitet sind.

2. Wärmedämmplatte nach Anspruch 1, mit Bohrsilikat-Glasfäden als temperaturunbeständigen Fäden, dadurch gekennzeichnet, daß die andersartigen Fäden (6) aus Material auf der Basis von Siliciumoxid und/oder Aluminiumsilikat bestehen.

3. Wärmedämmplatte nach Anspruch 1 oder 2, dadurch gekennzeichnet, daß zwischen je zwei benachbarten temperaturunbeständigen Fäden (5) höchstens ein andersartiger temperaturbeständiger Faden (6) angeordnet ist.

4. Wärmedämmplatte nach einem der Ansprüche 1 bis 3, dadurch gekennzeichnet, daß die andersartigen, temperaturbeständigen Fäden (6) ausschließlich in Kettrichtung des Gewebes liegen.

FIG.1

FIG.2

FIG. 3

| | | | |
|---|---|---|---|
| **EINSCHLÄGIGE DOKUMENTE** | | | EP 83105062.0 |
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| Y,D | <u>DE - C3 - 2 036 124</u> (MICROPORE INTERNATIONAL)<br><br>* Anspruch 1; Spalte 4, Zeilen 6-15 *<br><br>-- | 1 | C 04 B 39/00<br>B 32 B 13/14<br>F 16 L 59/02<br>E 04 B 1/80<br>D 03 D 15/12<br>C 04 B 43/00 |
| Y | <u>DE - A1 - 2 658 415</u> (RISCHMÜLLER)<br><br>* Gesamt *<br><br>-- | 1 | |
| A | <u>CH - A - 539 705</u> (PÜTZER KUNST-STOFFTECHNIK)<br><br>* Spalte 1, Zeilen 23,24, 63-65 *<br><br>-- | 1 | |
| A,D | <u>DE - A1 - 2 928 695</u> (GRÜNZWEIG & HARTMANN)<br><br>* Anspruch 1; Seite 7, Zeilen 9-15 *<br><br>& EP-A1-0 022 581<br><br>-- | 1 | |
| | | | **RECHERCHIERTE SACHGEBIETE (Int. Cl. ³)** |
| A | <u>DD - A - 44 704</u> (POLYMARK)<br><br>-- | 1 | B 32 B<br>C 04 B<br>D 03 D<br>D 04 H |
| A | <u>US - A - 2 385 577</u> (JACOB)<br><br>* Seite 1, Spalte 1, Zeilen 37-48 *<br><br>---- | 1 | E 04 B<br>F 16 L |

Der vorliegende Recherchenbericht wurde für alle Patentansprüche erstellt.

| Recherchenort | Abschlußdatum der Recherche | Prüfer |
|---|---|---|
| WIEN | 16-09-1983 | BECK |